# FASCICULE DE BREVET EUROPEEN

(11) **EP 1 430 822 B1**
(45) Date de publication et mention de la délivrance du brevet: **15.06.2005**
(21) Numéro de dépôt: 03293155.2
(22) Date de dépôt: 15.12.2003
(51) Int. Cl.: A47J 37/12, A47J 43/28

(54) **Appareil de cuisine du type appareil à fondue**
Küchengerät für Fondue
Kitchen appliance for cooking fondue

(30) Priorité: 19.12.2002 FR 0216187
(43) Date de publication de la demande: 23.06.2004
(73) Titulaire: SEB SA, 69130 Ecully (FR)
(72) Inventeur: Lagrange, Valérie, 74150 Rumilly (FR)
(74) Mandataire: Pichat, Thierry

(56) Documents cités:
- DE-A- 4 200 407
- DE-A- 10 157 044
- DE-C- 19 702 944
- US-A- 3 585 050

## Description

La présente invention concerne un appareil de cuisine du type appareil à fondue, c'est à dire un appareil comportant, d'une part, une base chauffante et un récipient apte à reposer sur la base chauffante, et d'autre part, des fourchettes aptes à maintenir dans le récipient des morceaux d'un premier aliment à cuire ou à chauffer, le récipient étant apte à recevoir un autre aliment ou un produit alimentaire liquide dans lesquels on plonge le premier aliment de façon à permettre sa cuisson ou son chauffage.

Un tel appareil est parfaitement connu. Il permet de prendre des repas en famille ou entre amis de façon conviviale. Toutefois, certains consommateurs hésitent à acquérir ce type d'appareil de cuisine parce qu'il est d'usage très spécifique et le récipient et la base chauffante sont difficiles à transporter ensemble et occupent beaucoup de place quand on veut les ranger. Le document US-3585050 décrit le caractéristiques techniques du préambule de la revendication 1.

Le problème posé est de réaliser un appareil de cuisson du type appareil à fondue conformé de sorte que son agencement permet de le transporter plus facilement et de réduire son encombrement lors de son transport ou de son rangement.

Selon un premier aspect de l'invention, l'appareil du type précité comprend des moyens de fixation permettant la fixation de fourchettes dans le plan de l'ouverture du récipient.

Le premier aspect de la présente invention permet de ranger les fourchettes avec l'appareil sans que leur rangement génère espace de rangement supplémentaire important : les fourchettes sont couchées dans le plan de l'ouverture du récipient et occupent une faible épaisseur.

Ce premier aspect procure deux avantages :
- Habituellement, les fourchettes sont rangées soit indépendamment de l'appareil, par exemple avec les couverts, et elles peuvent de ce fait être déplacées et perdues, soit avec l'appareil dans l'emballage d'origine qui est relativement encombrant vu qu'il comprend un logement pour fourchettes, soit avec l'appareil, dans le récipient, et alors elles font saillie hors de l'ouverture et créent un encombrement particulier.
- De plus, la disposition des fourchettes en haut de l'ouverture du récipient forme une sorte de poignée permettant de transporter facilement l'appareil.

Selon un second aspect de l'invention, la section droite interne du récipient de l'appareil du type précité est supérieure à la section droite externe de la base de façon à permettre le rangement de la base dans le récipient.

De cette façon, l'appareil rangé occupe un volume réduit. Plus précisément, la hauteur de l'appareil en configuration rangée est égale à celle du récipient (c'est à dire à celle de l'appareil en configuration d'utilisation diminuée de celle de la base chauffante).

D'autres particularités et avantages de la présente invention apparaîtront dans la description qui va suivre. Aux dessins donnés à titre d'exemple non limitatif :
- la figure 1 est une vue en perspective d'un récipient d'un appareil de cuisine conforme à un mode de réalisation particulier de l'invention ;
- la figure 2 est une vue en perspective de dessous d'un support à fourchettes d'un appareil de cuisine conforme au mode de réalisation particulier de l'invention ;
- la figure 3 est une vue en perspective d'un appareil de cuisine en configuration d'utilisation conforme au mode de réalisation particulier de l'invention ; et
- la figure 4 est une vue en perspective de haut d'un appareil de cuisine en configuration de rangement conforme au mode de réalisation particulier de l'invention.

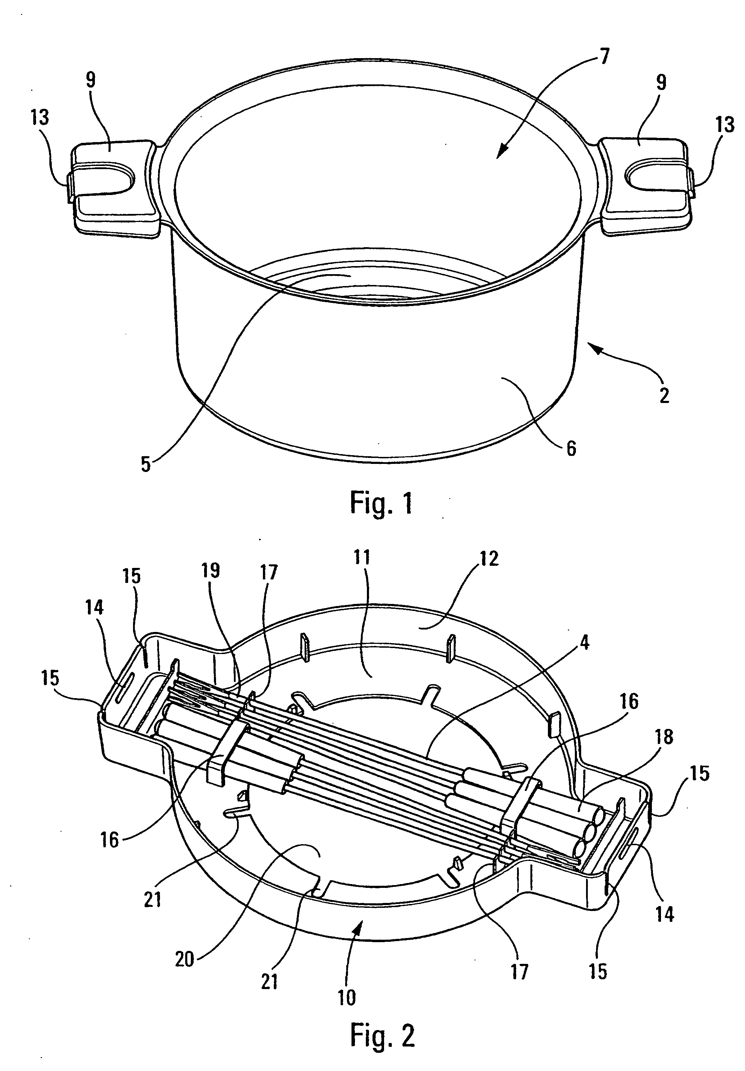

Comme on peut le voir aux figures 1 à 4, un appareil à fondue 1 comporte un récipient 2, une base chauffante 3 et des fourchettes 4 (en l'occurrence, six fourchettes 4). Le récipient 2 est adapté à recevoir un aliment à consommer et à reposer sur la base chauffante 3 de façon à permettre le cuisson ou le chauffage de l'aliment.

Le récipient 2 comporte une paroi de fond 5 adaptée à reposer sur la base chauffante 3, et une paroi latérale 6 définissant une ouverture 7. De façon similaire, la base chauffante 3 comporte une paroi latérale 8.

Selon un aspect de l'invention, la section droite interne du récipient 2 (définie par la section interne de la paroi latérale 6 du récipient 2) est supérieure à la section droite externe de la base 3 (définie par la section externe de la paroi latérale 8 de la base chauffante 3).

Ainsi selon ce premier aspect de l'invention, quand l'appareil à fondue 1 est en configuration de rangement, la base chauffante 3 est située dans le récipient 2.

Pour l'appareil à fondue 1 tel qu'illustré aux figures 1 à 4 qui est de configuration cylindrique, le diamètre interne du récipient 2 est supérieur au diamètre externe de la base chauffante 3.

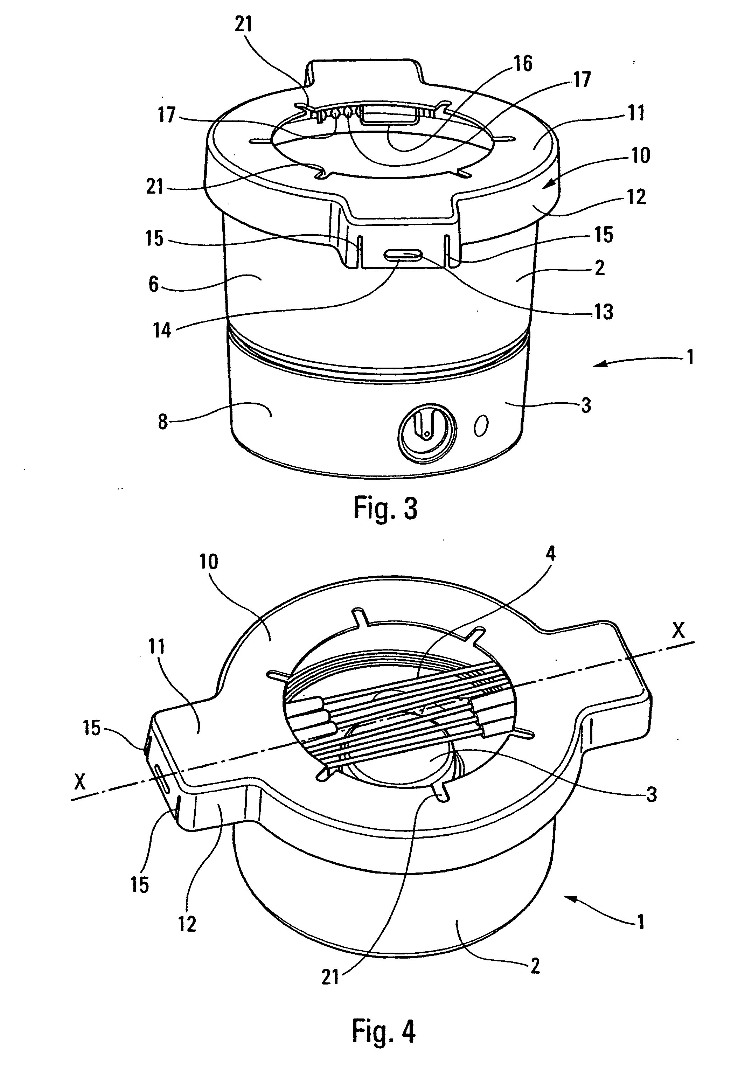

Selon un aspect de l'invention, comme on peut le voir à la figure 4, l'appareil à fondue 1 comprend des moyens de fixation qui permettent la fixation des fourchettes 4 dans le plan de l'ouverture 7 du récipient 2.

Comme on peut le voir à la figure 1, le récipient 2 comporte deux poignées de préhension 9 disposées à proximité de l'ouverture 8 et de façon diamétralement opposées l'une de l'autre.

Dans le présent exemple, les moyens de fixation permettent la fixation des fourchettes 4 dans l'axe X-X qui est défini par les poignées de préhension 9.

Dans le présent exemple l'appareil à fondue comprend un élément 10 qui est adapté à être solidarisé de façon amovible au récipient 2 et qui est conformé de sorte que les fourchettes 4 peuvent y être solidarisées de façon amovible.

Le support 10 du présent exemple, comme on peut le voir aux figures 3 et 4, comprend une paroi supérieure 11 et une paroi périphérique 12. Le support 10 est conformé de sorte que, quand il est solidarisé au récipient 2, sa paroi supérieure 11 et sa paroi périphérique forment respectivement les limites supérieures et radiales de l'appareil à fondue 1. Dans le présent exemple, le support 10 s'étend au-dessus et autour de l'ouverture 7 du récipient 2 et des poignées de préhension 9, quand il est solidarisé au récipient 2.

Le récipient 2 comporte des moyens de solidarisation qui sont adaptés à coopérer avec des moyens complémentaires de solidarisation réalisés sur le support 10 de façon à permettre la solidarisation de façon amovible de ce dernier au récipient 2.

Comme on peut le voir à la figure 1, chaque poignée de préhension 9 comprend un ergot 13 qui fait saillie radialement vers l'extérieur du récipient 2. Parallèlement, comme on peut le voir à la figure 2, chacune des deux parties de la paroi périphérique 12 adaptées à entourer une poignée de préhension 9, comporte une fente 14 qui est disposée de sorte que chaque ergot 13 puisse s'encliqueter dans une de ces fentes 14 et réaliser une solidarisation du support 10 au récipient 2.

Afin de faciliter l'encliquetage, la zone de la paroi périphérique 12 qui adjacente à une fente 14 est facilement déformable élastiquement grâce à la réalisation de deux encoches 15 disposées de part et d'autre de la fente 14.

La qualité de la solidarisation du support 10 au récipient 2 permet d'utiliser les fourchettes 4 comme poignée pour déplacer l'appareil à fondue 1 quand ce dernier est en configuration de rangement.

Dans le présent exemple, les moyens de fixation qui sont adaptés permettre la fixation de façon amovible des fourchettes 4 avec le support 10, sont réalisés sur la partie du support 10 adaptée à recouvrir les poignées de préhension 9 de façon à permettre l'alignement des fourchettes 4 selon l'axe X-X. Ces moyens de fixation sont réalisés sur la paroi supérieure 11 du support 10.

Comme on peut particulièrement bien le voir à la figure 2, chaque fourchette 4 est fixée de façon amovible au support 10, d'une part, par un anneau 16 qui est fermé et qui est situé sur une partie de la paroi supérieure 11 adaptée à recouvrir une première poignée de préhension 9, et, d'autre part, par un crochet 17 qui est ouvert de façon à recevoir la fourchette 4 par encliquetage et qui est situé sur une partie de la paroi supérieure 12 adaptée à recouvrir l'autre poignée de préhension 9.

La fixation de la fourchette 4 est particulièrement simple : on introduit une première extrémité 18 de celle-ci (en l'occurrence le manche 18) dans l'anneau 16 et ensuite on encliquette l'autre extrémité 19 dans le crochet 17.

La longueur de chaque fourchette 4 est légèrement inférieure à la distance séparant les deux ergots 13 l'un de l'autre (qui correspond à la largeur maximale du récipient 2).

Par cette disposition, quand l'appareil à fondue 1 est en configuration de rangement, les fourchettes 4 sont situées dans le plan de l'ouverture du récipient et dans l'axe défini par les poignées de préhension 9. De ce fait elles ne génèrent qu'une très faible augmentation de la hauteur du récipient 2 auquel elles sont solidarisées (par l'intermédiaire du support 10) et quasiment aucune augmentation de volume dans les autres dimensions.

Dans le présent exemple, un même anneau 16 est adapté à servir de moyens de fixation à plusieurs fourchettes 4 (en l'occurrence trois fourchettes 4).

Par ailleurs, les moyens de fixation (en l'occurrence les anneaux 16 et les crochets 17) sont agencés sur le support 10 de manière à permettre le rangement des fourchettes 4 de façon têtes bêches. Cette disposition permet d'augmenter le nombre de fourchettes 4 pouvant être fixées au support 10 sans augmenter la taille de ce dernier, notamment la largeur des parties du support adaptées à recouvrir les poignées de préhension 9.

De façon avantageuse, et comme on peut le voir aux figures 2 à 4, la paroi supérieure 11 comporte une ouverture centrale 20 qui est légèrement inférieure à l'ouverture 7 du récipient 2 et qui se trouve dans le prolongement de cette dernière quand le support 10 est solidarisé au récipient 2.

Ainsi, le support 10 sert de protection contre les brûlures en empêchant un contact direct avec le rebord supérieur du récipient 2. Bien évidemment, le support 10 est alors réalisé en une matière résistant à la chaleur et thermiquement peu conductrice.

De plus, l'ouverture centrale 20 comporte des rainures 21 qui s'étendent radialement vers l'extérieur du support 10. Chaque rainure 21 est adaptée à recevoir une fourchette 4 quand l'appareil à fondue 1 est utilisé, le support 10 étant en outre solidarisé au récipient 2, et ainsi à maintenir en place la fourchette 4 pendant la cuisson de l'aliment

Bien évidemment, la présente invention n'est pas limitée au mode de réalisation décrit en détail ci-dessus.

Il serait ainsi possible d'utiliser comme support 10 un élément pouvant être utilisé comme couvercle du récipient, c'est à dire sans ouverture centrale.

Il serait aussi possible de ne pas utiliser d'élément formant support, les moyens de fixation étant alors réalisés sur les poignées de préhension du récipient.

Il serait aussi possible de réaliser un appareil du type appareil à fondue ayant uniquement les caractéristiques de l'un ou l'autre des deux aspects de la présente invention.

## Revendications

1. Appareil de cuisine (1) du type appareil à fondue comportant, d'une part, une base chauffante (3) et un récipient (2) apte à reposer sur la base chauffante (3), et, d'autre part, des fourchettes (4) aptes à maintenir dans le récipient (2) des morceaux d'un premier aliment à cuire ou à chauffer, le récipient (2) étant apte à recevoir un autre aliment ou un produit alimentaire liquide dans lesquels le premier aliment est plongé de façon à permettre sa cuisson ou son chauffage, **caractérisé en ce qu'**il comprend des moyens de fixation (16,17) permettant la fixation de fourchettes (4) dans le plan de l'ouverture (7) du récipient (2).

2. Appareil de cuisine (1) selon la revendication 1, **caractérisé en ce que** les moyens de fixation (16,17) permettent la fixation des fourchettes (4) dans l'axe (X-X) défini par les poignées de préhension (9) du récipient (2).

3. Appareil de cuisine (1) selon la revendication 2, **caractérisé en ce que** les moyens de fixation (16,17) sont réalisés sur les poignées de préhension (9).

4. Appareil de cuisine (1) selon la revendication 1 ou 2, **caractérisé en ce que** les moyens de fixation (16,17) sont réalisés sur un élément formant support (10) adapté à être solidarisé de façon amovible au récipient (2).

5. Appareil de cuisine (1) selon la revendication 4, **caractérisé en ce que** le support (10) est conformé de façon à s'étendre au-dessus de l'ouverture (7) et des poignées de préhension (9).

6. Appareil de cuisine (1) selon la revendication 4 ou 5, **caractérisé en ce que** le récipient (2) comporte des moyens de solidarisation (13) adaptés à coopérer avec des moyens complémentaires de solidarisation (14) réalisés sur le support (10).

7. Appareil de cuisine (1) selon la revendication 6, **caractérisé en ce que** les moyens de solidarisation (13) sont deux ergots (13), chacun faisant saillie radialement d'une poignée de préhension (9), et **en ce que** les moyens complémentaire de solidarisation (14) sont deux fentes (14), chacune étant réalisée sur une partie du support (10) entourant une poignée de préhension (9) de façon à recevoir l'ergot (13) correspondant par encliquetage.

8. Appareil de cuisine (1) selon l'une des revendications 4 à 7, **caractérisé en ce que** les moyens de fixation (16,17) sont réalisés sur les parties du support (10) qui sont adaptées à recouvrir les poignées de préhension (9).

9. Appareil de cuisine (1) selon l'une des revendications 4 à 8, **caractérisé en ce que**, pour chaque fourchette (4), les moyens de fixation (16,17) comprennent, d'une part, un anneau (16) fermé et situé sur une partie du support (10) adaptée à recouvrir une poignée de préhension (9), et, d'autre part, un crochet (17) adapté à recevoir la fourchette (4) par encliquetage et situé sur la partie du support (10) adaptée à recouvrir l'autre poignée de préhension (9).

10. Appareil de cuisine (1) selon la revendication 9, **caractérisé en ce qu'**un même anneau (16) est adapté à servir de moyens de fixation à plusieurs fourchettes (4).

11. Appareil de cuisine (1) selon l'une des revendications 4 à 10, **caractérisé en ce que** les moyens de fixation (16,17) sont agencés sur le support (10) de manière à permettre le rangement des fourchettes (4) de façon têtes bêches.

12. Appareil de cuisine (1) selon l'une des revendications 4 à 11, **caractérisé en ce que** le support (10) est le couvercle du récipient (2).

13. Appareil de cuisine (1) selon l'une des revendications 4 à 11, **caractérisé en ce que** le support (10) comporte une ouverture centrale (20) légèrement inférieure à l'ouverture (7) du récipient et se trouvant dans le prolongement de cette dernière quand le support (10) est solidarisé au récipient (2).

14. Appareil de cuisine (1) selon l'une des revendications 1 à 13, **caractérisé en ce que** la section droite interne du récipient (2) est supérieure à la section droite externe de la base chauffante (3) de façon à permettre le rangement de la base chauffante (3) dans le récipient (2).

15. Appareil de cuisine (1) selon la revendication 14, **caractérisé en ce que** la base chauffante (3) et le récipient (2) sont de configuration cylindrique, le diamètre interne du récipient (2) étant supérieur au diamètre externe de la base chauffante (3).

## Patentansprüche

1. Küchengerät (1) vom Typ Küchengerät für Fondue mit einerseits einer Heizbasis (3) und einem Gefäß (2), das zum Aufstellen auf der Heizbasis (3) eingerichtet ist, und andererseits Gabeln (4), die dafür geeignet sind, Stücke eines ersten zu kochenden oder zu erwärmenden Nahrungsmittels im Gefäß (2) zu halten, wobei das Gefäß (2) dafür eingerichtet ist, ein anderes Nahrungsmittel oder ein anderes flüssiges Nahrungsmittel aufzunehmen, in das das erste Nahrungsmittel eingetaucht wird, um sein Kochen oder seine Erwärmung zu ermöglichen, **dadurch gekennzeichnet, daß** das Gerät Befestigungsmittel (16, 17) aufweist, welche die Befestigung von Gabeln (4) in der Ebene der Öffnung (7) des Gefäßes (2) ermöglichen.

2. Küchengerät (1) nach Anspruch 1, **dadurch gekennzeichnet, daß** die Befestigungsmittel (16, 17) die Befestigung der Gabeln (4) in der durch die Handgriffe (9) des Gefäßes (2) definierten Achse (X-X) ermöglichen.

3. Küchengerät (1) nach Anspruch 2, **dadurch gekennzeichnet, daß** die Befestigungsmittel (16, 17) an den Handgriffen (9) ausgebildet sind.

4. Küchengerät (1) nach Anspruch 1 oder 2, **dadurch gekennzeichnet, daß** die Befestigungsmittel (16, 17) an einem Element ausgebildet sind, das einen Halter (10) bildet, der zur abnehmbaren Befestigung am Gefäß (2) eingerichtet ist.

5. Küchengerät (1) nach Anspruch 4, **dadurch gekennzeichnet, daß** der Halter (10) so ausgebildet ist, daß er sich oberhalb der Öffnung (7) und der Handgriffe (9) erstreckt.

6. Küchengerät (1) nach Anspruch 4 oder 5, **dadurch gekennzeichnet, daß** das Gefäß (2) Verbindungsmittel (13) aufweist, die dafür eingerichtet sind, mit komplementären Verbindungsmitteln (14) zusammenzuwirken, die am Halter (10) ausgebildet sind.

7. Küchengerät (1) nach Anspruch 6, **dadurch gekennzeichnet, daß** die Verbindungsmittel (13) zwei Zapfen (13) sind, die jeder radial von einem Handgriff (9) vorstehen, und daß die komplementären Verbindungsmittel (14) zwei Schlitze (14) sind, die jeder an einem Teil des Halters (10) ausgebildet sind, der einen Handgriff (9) umgibt, um den entsprechenden Zapfen (13) durch Einrasten aufzunehmen.

8. Küchengerät (1) nach einem der Ansprüche 4 bis 7, **dadurch gekennzeichnet, daß** die Befestigungsmittel (16, 17) an den Teilen des Halter (10) ausgebildet sind, die zur Abdeckung der Handgriffe (9) vorgesehen sind.

9. Küchengerät (1) nach einem der Ansprüche 4 bis 8, **dadurch gekennzeichnet, daß** für jede Gabel (4) die Befestigungsmittel (16, 17) einerseits einen geschlossenen Ring (16) aufweisen, der an einem zur Abdeckung eines Handgriffs (9) vorgesehenen Teil des Halters (10) gelegen ist, und andererseits einen Haken (17) aufweisen, der zur Aufnahme der Gabel (4) durch Einrasten ausgebildet und an dem Teil der Halters (10) gelegen ist, der zur Abdeckung des anderen Handgriffs (9) vorgesehen ist.

10. Küchengerät (1) nach Anspruch 9, **dadurch gekennzeichnet, daß** ein und derselbe Ring (16) dafür eingerichtet ist, als Befestigungsmittel für mehrere Gabeln (4) zu dienen.

11. Küchengerät (1) nach einem der Ansprüche 4 bis 10, **dadurch gekennzeichnet, daß** die Befestigungsmittel (16, 17) am Halter (10) so ausgebildet sind, daß sie die Anordnung der Gabeln (4) in Kopf zu Fuß Stellung ermöglichen..

12. Küchengerät (1) nach einem der Ansprüche 4 bis 11, **dadurch gekennzeichnet, daß** der Halter (10) der Deckel des Gefäßes (2) ist.

13. Küchengerät (1) nach einem der Ansprüche 4 bis 11, **dadurch gekennzeichnet, daß** der Halter (10) eine Mittelöffnung (20) aufweist, die etwas kleiner als die Öffnung (7) des Gefäßes ist und sich in der Verlängerung derselben befindet, wenn der Halter (10) mit dem Gefäß (2) verbunden ist.

14. Küchengerät (1) nach einem der Ansprüche 1 bis 13, **dadurch gekennzeichnet, daß** der innere Querschnitt des Gefäßes (2) größer als der äußere Querschnitt der Heizbasis (3) ist, so daß die Unterbringung der Heizbasis (3) im Gefäß (2) möglich ist.

15. Küchengerät (1) nach Anspruch 14, **dadurch gekennzeichnet, daß** die Heizbasis (3) und das Gefäß (2) zylindrische Gestalt haben, wobei der Innendurchmesser des Gefäßes (2) größer als der Außendurchmesser der Heizbasis (3) ist.

## Claims

1. A cooking appliance (1) of the fondue appliance type, comprising, on the one hand, a heater base (3) and a container (2) adapted to rest on the heater base (3) and, on the other hand, forks (4) adapted to hold in the container (2) pieces of a first food for cooking or heating, the container (2) being adapted to receive another food or a liquid food product in which food or liquid food product the first food is plunged to enable it to be cooked or heated, **characterised in that** it comprises fixing means (16, 17) enabling forks (4) to be fixed in the plane of the opening (7) of the container (2).

2. A cooking appliance (1) according to claim 1, **characterised in that** the fixing means (16, 17) enable forks (4) to be fixed on the axis (X-X) defined by the gripper handles (9) of the container (2).

3. A cooking appliance (1) according to claim 2, **characterised in that** the fixing means (16, 17) are constructed on the gripper handles (9).

4. A cooking appliance (1) according to claim 1 or 2, **characterised in that** the fixing means (16, 17) are constructed on a support-forming element (10) adapted to be detachably connected to the container (2).

5. A cooking appliance (1) according to claim 4, **characterised in that** the support (10) is so shaped as to extend above the opening (7) and the gripper handles (9).

6. A cooking appliance (1) according to claim 4 or 5, **characterised in that** the container (2) comprises connecting means (13) adapted to co-operate with complementary connecting means (14) constructed on the support (10).

7. A cooking appliance (1) according to claim 6, **characterised in that** the connecting means (13) are two lugs (13), each projecting radially from a gripper handle (9), and **in that** the complementary connecting means (14) are two slots (14) each formed on a part of the support (10) surrounding a gripper handle (9) so as to receive the corresponding lug (13) by catch action.

8. A cooking appliance (1) according to any one of claims 4 to 7, **characterised in that** the fixing means (16, 17) are constructed on those parts of the support (10) which are adapted to cover the gripper handles (9).

9. A cooking appliance (1) according to any one of claims 4 to 8, **characterised in that** for each fork (4) the fixing means (16, 17) comprise on the one hand a closed ring (16) situated on a part of the support (10) adapted to cover a gripper handle (9) and, on the other hand, a hook (17) adapted to receive the fork (4) by catch action and situated on the part of the support (10) adapted to cover the other gripper handle (9).

10. A cooking appliance (1) according to claim 9, **characterised in that** one and the same ring (16) is adapted to serve as fixing means for a plurality of forks (4).

11. A cooking appliance (1) according to any one of claims 4 to 10, **characterised in that** the fixing means (16, 17) are arranged on the support (10) so as to enable the forks (4) to be arranged alternate ways up.

12. A cooking appliance (1) according to any one of claims 4 to 11, **characterised in that** the support (10) is the lid of the container (2).

13. A cooking appliance (1) according to any one of claims 4 to 11, **characterised in that** the support (10) comprises a central opening (20) slightly smaller than the opening (7) of the container and situated in extension of the latter when the support (10) is connected to the container (2).

14. A cooking appliance (1) according to any one of claims 1 to 13, **characterised in that** the internal cross-section of the container (2) is larger than the external cross-section of the heater base (3) so as to enable the heater base (3) to be stored in the container (2).

15. A cooking appliance (1) according to claim 14, **characterised in that** the heater base (3) and the container (2) are of cylindrical configuration, the inside diameter of the container (2) being larger than the outside diameter of the heater base (3).
